(19) Europäisches Patentamt / European Patent Office / Office européen des brevets

(11) **EP 2 112 390 A2**

(12) **EUROPEAN PATENT APPLICATION**

(43) Date of publication:
**28.10.2009 Bulletin 2009/44**

(51) Int Cl.:
***F16D 28/00*** *(2006.01)*

(21) Application number: **09005723.3**

(22) Date of filing: **23.04.2009**

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(30) Priority: **25.04.2008 JP 2008115919**

(71) Applicant: **AISIN AI Co., Ltd.
Nishio-shi,
Aichi-ken (JP)**

(72) Inventors:
• **Kawamoto, Masaki
Nishio-shi
Aichi-ken (JP)**
• **Fukaya, Masaru
Nishio-shi
Aichi-ken (JP)**

(74) Representative: **Marshall, John Grahame
SERJEANTS
25 The Crescent
King Street
Leicester LE1 6RX (GB)**

(54) **Clutch control system**

(57)     A clutch control system includes a release fork (10) including a press arm (12) and a drive arm (13), the release fork (10) operating a clutch (30), a worm wheel (20) including teeth (20a), a roller (22) rotatably supported by a support pin (21) of which one end is fixed to the worm wheel (20), the support pin (21) extending in parallel with a wheel shaft (23) while having a predetermined distance therefrom, and a worm (24) driven to rotate by an electric motor (25) and engaging with the teeth (20a). When the worm wheel (20) is driven by the motor (25), the roller (22) presses a side portion (13a) of the drive arm (13), and a release bearing (31) of the clutch (30) is pressed by an end portion of the press arm (12) to bring the clutch (30) to one of the engagement state and the disengagement state.

FIG. 1

**EP 2 112 390 A2**

Printed by Jouve, 75001 PARIS (FR)

**Description**

CROSS REFERENCE TO RELATED APPLICATIONS

FIELD OF THE INVENTION

The present invention relates to a clutch control system.

BACKGROUND

A known clutch control system using an electric motor for engaging or disengaging a clutch is disclosed in JP2003-166557A, for example. The clutch control system disclosed includes a release fork rotating about a rotational center at an intermediate portion. One end of the release fork is in contact with a release bearing of the clutch and the other end of the release fork is pressed by a push rod so as to engage or disengage the clutch. The clutch control system also includes a reduction gear that reduces rotations of the electric motor and then converts the reduced revolutions into a force for pressing the release fork via the push rod. The reduction gear is constituted by a planetary gear reduction mechanism including multiple pinion gears, a carrier, a fixed ring gear, an output ring gear, and a sun gear. The carrier supports each of the pinion gears to be rotatable. The fixed ring gear, which is prohibited to rotate, engages with the pinion gears. The output ring gear is connected to the other end of the release fork via the push rod so as to engage with the pinion gears. The output ring gear has a different number of teeth from that of the fixed ring gear. The sun gear driven by the electric motor engages with each of the pinion gears.

The aforementioned clutch control system may be functionally satisfied. However, in order to operate the release fork, the aforementioned clutch control system requires the planetary gear reduction mechanism and the push rod for connecting the planetary gear reduction mechanism with the release fork, which leads to an increase of the number of components. In addition, an increase in manufacturing cost may be inevitable.

A need thus exists for a clutch control system which is not susceptible to the drawback mentioned above

SUMMARY OF THE INVENTION

According to an aspect of the present invention, a clutch control system includes a release fork rotatably supported by a release shaft via a support portion and including a press arm and a drive arm extending from the support portion in a radial direction, the release fork operating a clutch to be brought to one of an engagement state and a disengagement state, a worm wheel rotatably supported by a wheel shaft arranged in parallel with the release shaft, the worm wheel including teeth, a roller rotatably supported by a support pin of which one end is fixed to one side of the worm wheel, the support pin extending in parallel with the wheel shaft while having a predetermined distance therefrom, and a worm driven to rotate by an electric motor and engaging with the teeth of the worm wheel to rotate the worm wheel. When the worm wheel is driven to rotate by the electric motor, the roller presses a side portion formed at the drive arm to rotate the release fork, and a release bearing provided at the clutch is pressed by an end portion formed at the press arm to bring the clutch to one of the engagement state and the disengagement state. Preferably the teeth of the worm wheel are arranged around a rotary axis of the worm wheel, extending around that axis for less than 180°, advantageously for about 90°.

According to the aforementioned invention, individual component members of a mechanism for converting rotations of the motor into a rotation of the release fork are only the worm, the worm wheel, the support pin, and the roller. Because the clutch control system according to the present invention is constituted by the small number of component members and the simple structure, a manufacturing cost of the clutch control system may be decreased. In addition, the rotations of the motor (i.e., a speed thereof) is reduced by two steps, i.e., the first step is achieved by the worm and the worm wheel, and the second step is achieved by the side portion and the roller in contact with the side portion. Thus, a sufficiently large reduction ratio is obtained.

Further, an elastic reaction force of the release bearing of the clutch is gradually increasing along with an increase of an amount of pressing force applied to the release bearing. Along with the rotation of the worm wheel, an angle formed by an intersection between a tangent of a movement path of the center of the roller formed with reference to an axial center of the wheel shaft and the side portion of the drive arm is gradually decreasing. Thus, an increase of a drive torque required for the motor is relatively small relative to the increase of the elastic reaction force of the release bearing. In this case, the drive torque required for the motor may possibly even decrease, and thus a reduction of a size of the motor is achievable, which leads to a downsizing of the clutch control system.

BRIEF DESCRIPTION OF THE DRAWINGS

The foregoing and additional features and characteristics of the present invention will become more apparent from the following detailed description considered with the reference to the accompanying drawings, wherein:

Fig. 1 is a side view illustrating an entire structure of a clutch control system when a release bearing is in a non-operating state according to an embodiment of the present invention;

Fig. 2 is a side view illustrating the entire structure of the clutch control system shown in Fig. 1 when the release bearing is in an operating state; and

Fig. 3 is a partial enlarged side view explaining a gradual increase of a component force by a roller to press a side portion of a drive arm along with a rotation of a worm wheel according to the embodiment of the present invention.

DETAILED DESCRIPTION

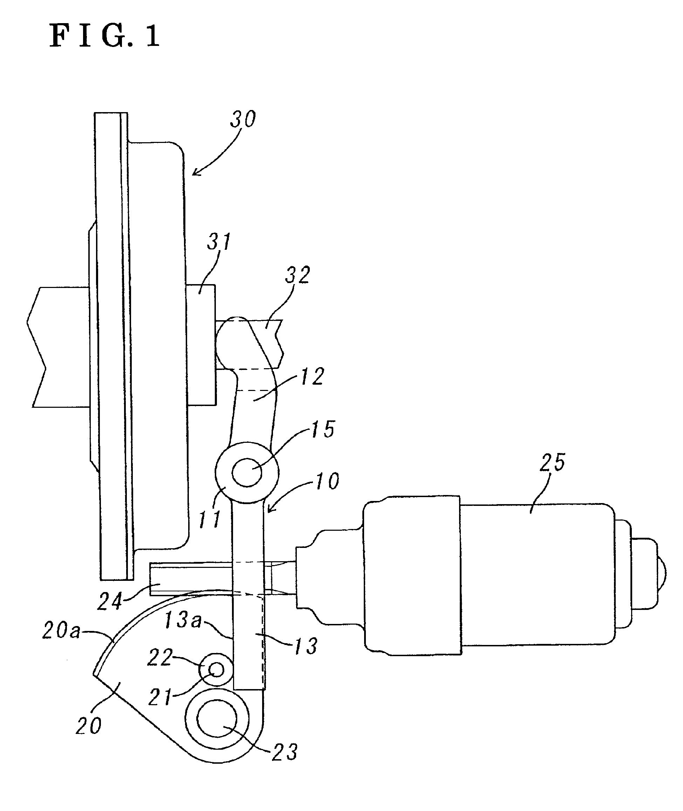

An embodiment of the clutch control system will be explained with reference to Figs. 1 to 3. The clutch control system according to the present embodiment is applied to engage or disengage a friction clutch 30 (i.e., to bring a friction clutch 30 to an engagement state or a disengagement state) serving as a clutch provided between an output shaft of an engine for a vehicle and an input shaft of a transmission (hereinafter referred to as a transmission input shaft) 32. The friction clutch 30 according to the present embodiment is in an engagement state by means of a spring incorporated within the friction clutch 30 when a release bearing 31 is in a free state (i.e., a non-operating state) as shown in Fig. 1. In addition, in Fig. 1, the release bearing 31 extends axially outwardly to a maximum extent. The engagement state of the friction clutch 30 is released by a pressing of the release bearing 31.

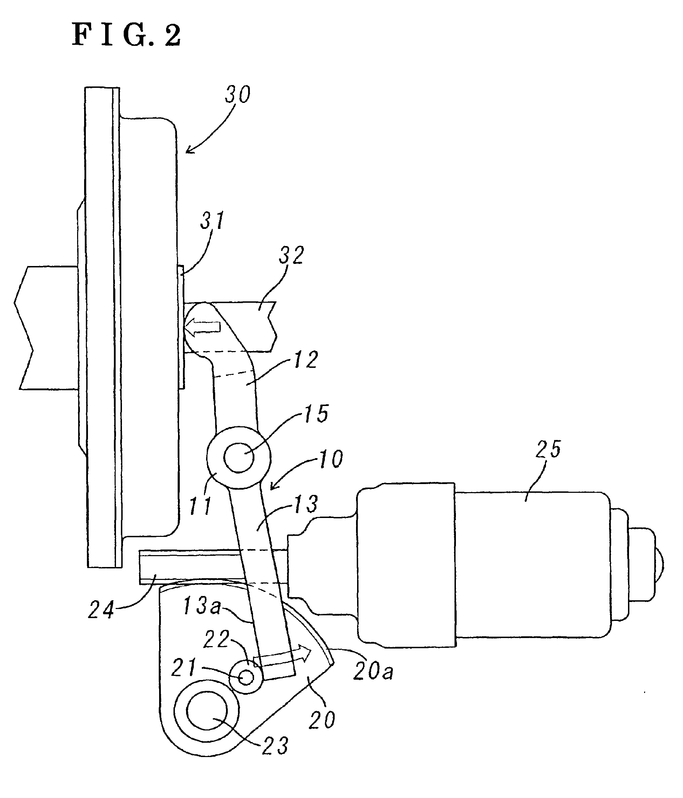

A release fork 10 that presses the release bearing 31 so as to cancel the engagement state of the friction clutch 30 includes a boss portion 11 serving as a support portion, a press arm 12, and a drive arm 13. More specifically, as illustrated in Figs. 1 and 2, the boss portion 11 is rotatably supported by a release shaft 15 that is provided at a transmission casing and that extends at one axial side of the friction clutch 30 so as to be orthogonal to the input shaft 32 in a spaced manner. The press arm 12 and the drive arm 13 extend from the boss portion 11 in radially opposite directions from each other. An end portion of the press arm 12 that makes contact with the release bearing 31 is divided into two portions to thereby sandwich the transmission input shaft 32 therebetween.

A wheel shaft 23 is provided at the transmission casing in a position opposite from the transmission input shaft 32 relative to the release shaft 15. The wheel shaft 23 is arranged in parallel with the release shaft 15. A worm wheel 20 is rotatably supported by the wheel shaft 23. A support pin 21, of which one end is fixed to one side of the worm wheel 20, extends in parallel with the wheel shaft 23 while having a predetermined distance therefrom. A roller 22 is rotatably supported by the support pin 21 in a manner not to be removed therefrom. The worm wheel 20, which is formed into a fan shape, includes teeth 20a at a most outer circumferential side. The teeth 20a engage with a worm 24 arranged between the release shaft 15 and the wheel shaft 23 so as to be parallel with the transmission input shaft 32 and provided at an end of an electric motor 25 that is attached to the transmission casing.

In a case where the release bearing 31 is in the non-operating state as illustrated in Fig. 1, the support pin 21 that supports the roller 22 is arranged substantially orthogonal to the transmission input shaft 32 in a spaced manner. The support pin 21 is positioned in the vicinity of a line extending from a center of the wheel shaft 23 to the transmission input shaft 32. An end portion of the press arm 12 of the release fork 10 is in slight contact with an end surface of the release bearing 31 that extends to a maximum extent in the free state. A side portion 13a of the drive arm 13 is also in slight contact with an outer peripheral surface of the roller 22. Accordingly, the release bearing 31 is not pressed and thus the friction clutch 30 is maintained in the engagement state.

In a case where the worm 24 is driven to rotate in a predetermined direction by the electric motor 25 in the non-operating state of the release bearing 31 so that the worm wheel 20 rotates in the clockwise direction, the side portion 13a of the drive arm 13 is pressed by the outer peripheral surface of the roller 22 that rotates together with the worm wheel 20. Then, the release fork 10 rotates about the release shaft 15 in the counterclockwise direction as indicated by hollow arrows in Fig. 2. Therefore, the release bearing 31 is pushed by the end portion of the press arm 12 that is rotating, thereby releasing the engagement state of the friction clutch 30. In such state, when the electric motor 25 is driven to rotate in an opposite direction from the aforementioned predetermined direction, the worm wheel 20 rotates in the counterclockwise direction. Then, the release fork 10 and the press arm 12 thereof rotate in the clockwise direction. Consequently, the release bearing 31 biased by the spring is returned to a state shown in Fig. 1 to thereby bring the friction clutch 30 to the engagement state.

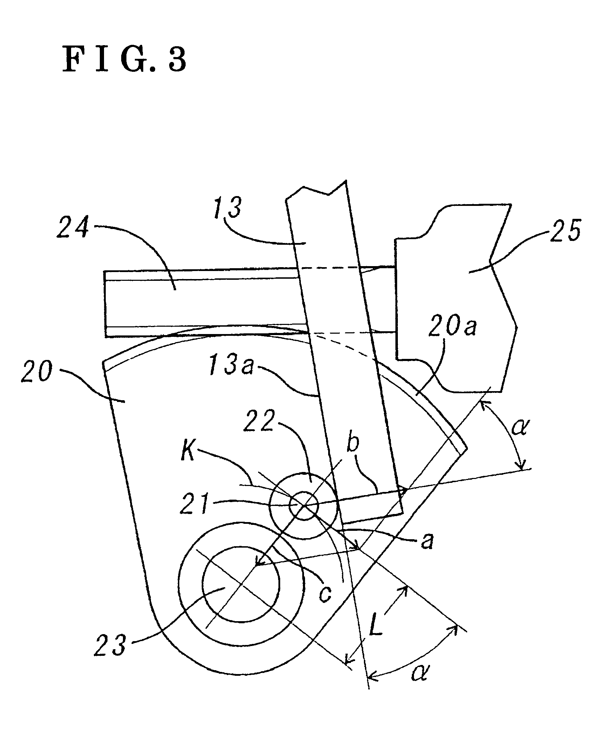

According to the present embodiment, the roller 22 rotates in a manner that a center thereof moves along a path K (i.e., a movement path K of the roller 22) formed in an arc shape with reference to an axial center of the wheel shaft 23. The side portion 13a of the drive arm 13 is pressed by the outer peripheral surface of the roller 22 to thereby rotate the release fork 10. While the worm wheel 20 is rotating further from the non-operating state, an angle $\alpha$ (see Fig. 3) formed by an intersection between a tangent of the movement path K of the center of the roller 22 and the side portion 13a of the drive arm 13 is gradually decreasing. In addition, as illustrated in Fig. 3, a force "a" in a direction of the tangent of the movement path K applied to the roller 22 from the electric motor 25 is decomposed into a component force "b" perpendicular to the side portion 13a and a component force "c" in a direction of a line connecting the respective centers of the roller 22 and the wheel shaft 23. The side portion 13a is pressed by means of the component force "b", which leads to the rotation of the release fork 10 about the release shaft 15. Then, the end portion of the press arm 12 presses the release bearing 31 to thereby disengage the friction clutch 30.

The component force "b" is represented as below.

$$b = a / \cos \alpha$$

$$T = a \cdot L$$

Wherein T is a torque applied to the worm wheel 20 from the electric motor 25 and L is a distance between the centers of the support pin 21 and the wheel shaft 23. The angle α, which is 90 degrees in the non-operating state of the release bearing 31 as illustrated in Fig. 1, is gradually decreasing along with the rotation of the worm wheel 20 from the non-operating state of the release bearing 31. Accordingly, assuming that the torque T applied to the worm wheel 20 from the electric motor 25 is a constant value, the component force "b" applied by the roller 22 to press the side portion 13a of the drive arm 13 is gradually increasing along with the rotation of the worm wheel 20.

According to the aforementioned embodiment, individual component members of a mechanism for converting rotations of the electric motor 25 into a rotation of the release fork 10 are only the worm 24, the worm wheel 20, the support pin 21, and the roller 22. That is, the simple structure is achieved with only four members. Because the clutch control system according to the present embodiment is constituted by the small number of component members and the simple structure, a manufacturing cost of the clutch control system may be decreased. In addition, the rotations of the motor 25 (i.e., a speed thereof) is reduced by two steps, i.e., the first step is achieved by the worm 24 and the worm wheel 20, and the second step is achieved by the side portion 13a and the roller 22 in contact with the side portion 13a. Thus, a sufficiently large reduction ratio is obtained.

An elastic reaction force of the release bearing 31 of the friction clutch 30 is gradually increasing along with an increase of an amount of pressing force applied to the release bearing 31. According to the present embodiment, because the component force "b" applied by the roller 22 to press the side portion 13a of the drive arm 13 is gradually increasing along with the rotation of the worm wheel 20, an increase of a drive torque required for the electric motor 25 is relatively small relative to the increase of the elastic reaction force of the release bearing 31. In this case, the drive torque required for the electric motor 25 may possibly even decrease, and thus a reduction of a size of the motor 25 is achievable, which leads to a downsizing of the clutch control system.

According to the aforementioned embodiment, the press arm 12 and the drive arm 13 of the release fork 10 extend in opposite directions from each other from the boss portion 11. Alternatively, the press arm 12 and the drive arm 13 may extend in the same direction. In such case, the clutch control system may be further downsized. Further, the friction clutch 30 according to the embodiment is in an engagement state by means of the spring when the release bearing 31 is in the free state and in a disengagement state by a pressing of the release bearing 31. Alternatively, the friction clutch 30 may disengage when the release bearing 31 is in the free state and may engage by a pressing of the release bearing 31.

**Claims**

1. A clutch control system comprising:

   a release fork (10) rotatably supported by a release shaft (15) via a support portion (11) and including a press arm (12) and a drive arm (13) extending from the support portion (11) in a radial direction, the release fork (10) operating a clutch (30) to be brought to one of an engagement state and a disengagement state;
   a worm wheel (20) rotatably supported by a wheel shaft (23) arranged in parallel with the release shaft (15), the worm wheel (20) including teeth (20a);
   a roller (22) rotatably supported by a support pin (21) of which one end is fixed to one side of the worm wheel (20), the support pin (21) extending in parallel with the wheel shaft (23) while having a predetermined distance therefrom; and
   a worm (24) driven to rotate by an electric motor (25) and engaging with the teeth (20a) of the worm wheel (20) to rotate the worm wheel (20),

   wherein when the worm wheel (20) is driven to rotate by the electric motor (25), the roller (22) presses a side portion (13a) formed at the drive arm (13) to rotate the release fork (10), and a release bearing (31) provided at the clutch (30) is pressed by an end portion formed at the press arm (12) to bring the clutch (30) to one of the engagement state and the disengagement state.

2. A clutch control system according to claim 1, wherein the teeth (20a) are arranged around a rotary axis of the worm wheel (20) and extend around that axis for less than 180°.

3. A clutch control system according to claim 2, wherein the teeth (20a) extend around the axis for about 90°.

# F I G. 1

# F I G. 2

# F I G. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003166557 A